# EUROPEAN PATENT APPLICATION

(11) **EP 4 564 893 A1**
(43) Date of publication of application: **04.06.2025**
(21) Application number: 23845613.1
(22) Date of filing: 26.07.2023
(51) Int. Cl.: H04W 24/08, H04W 24/10

(54) **MEASUREMENT ALIGNMENT METHOD, AND TERMINAL AND NETWORK-SIDE DEVICE**

(30) Priority: 29.07.2022 CN 202210903053
(71) Applicant: Datang Mobile Communications Equipment Co., Ltd., Beijing 100085 (CN)
(72) Inventor: WANG, Ruiwei, Beijing 100085 (CN); NI, Chunlin, Beijing 100085 (CN); WANG, Haocheng, Beijing 100085 (CN)
(74) Representative: Studio Torta S.p.A.
(86) International application number: PCT/CN2023/109397
(87) International publication number: WO 2024/022405

(57) **Abstract**

The present disclosure discloses a measurement alignment method, and a terminal and a network-side device, which are used for aligning a QoE measurement and an MDT measurement for UE that is in an idle state and an inactive state. The method includes: receiving configuration information, and activating a first quality measurement based on the configuration information, where the configuration information represents configuration information required to perform the first quality measurement and a second quality measurement; determining a measurement manner, where the measurement manner represents whether to perform the second quality measurement associated with the first quality measurement in a measurement period of the first quality measurement; and aligning the first quality measurement and the second quality measurement based on the measurement manner, and determining an aligned measurement result.

## Description

### CROSS REFERENCE TO RELATED APPLICATION

The present disclosure claims priority to Chinese patent application No. 202210903053.9, filed with the China National Intellectual Property Administration on July 29, 2022, and entitled with "MEASUREMENT ALIGNMENT METHOD, TERMINAL AND NETWORK-SIDE DEVICE". The disclosure of the aforementioned application is hereby incorporated by reference in its entirety.

### TECHNICAL FIELD

The present disclosure relates to the field of wireless communication technologies and, in particular, to a measurement alignment method, a terminal and a network-side device.

### BACKGROUND

In order to enhance user perception of MBS (Multicast/Broadcast Services, Multicast/Broadcast Services) services, QoE (Quality of Experience, Quality of Experience) measurement can be configured for the MBS services. User Equipment (User Equipment, UE) receives a multicast service and a broadcast service in a connected state, and can directly report them to a base station after generating a QoE measurement report. The UE receives a broadcast service in an idle state or an inactive state, and after generation of a QoE measurement report, the QoE measurement report needs to be temporarily stored before being reported to the base station after the UE's connection to the connected state.

In order to better analyze the QoE measurement report, it is usually necessary to obtain an MDT (Minimization of Drive-Test, Minimization of Drive-Test) measurement result recorded by the UE during the same time period, namely, the MDT measurement report and the QoE measurement report that are aligned, that is, the QoE measurement report and the MDT measurement report need to include measurement results from the same time period.

With regard to the QoE measurement for the UE in the connected state, the base station can be notified when the service related to the UE starts or stops, and the base station can also configure the MDT measurement accordingly to meet a requirement that the QoE measurement and the MDT measurement contain the same time period. However, with regard to the QoE measurement in the idle state and the inactive state, such as QoE measurement of a broadcast service, the base station is unaware when the UE starts receiving the broadcast service or when the QoE measurement is generated, so the MDT measurement cannot be configured correspondingly, and ultimately alignment between the QoE measurement and the MDT measurement cannot be achieved.

### SUMMARY

The present disclosure provides a measurement alignment method, a terminal and a network-side device, which achieves alignment between a QoE measurement and an MDT measurement for UE in an idle state and an inactive state.

In a first aspect, a measurement alignment method provided in an embodiment of the present disclosure includes:
receiving configuration information, and activating a first quality measurement based on the configuration information, where the configuration information represents configuration information required to perform the first quality measurement and a second quality measurement;
determining a measurement manner, where the measurement manner represents whether to perform the second quality measurement associated with the first quality measurement in a measurement period of the first quality measurement; and
aligning the first quality measurement and the second quality measurement based on the measurement manner, and determining an aligned measurement result.

In some implementations, receiving the configuration information, and activating the first quality measurement based on the configuration information include:
receiving the configuration information through an access stratum and sending the configuration information required to perform the first quality measurement in the configuration information to an application layer; and
activating the first quality measurement through the application layer, where activating the first quality measurement represents that the first quality measurement is performable.

In some implementations, aligning the first quality measurement and the second quality measurement based on the measurement manner, and determining the aligned measurement result include:
if the measurement manner represents to perform the second quality measurement associated with the first quality measurement in the measurement period of the first quality measurement, aligning the first quality measurement and the second quality measurement based on the measurement period, and determining the aligned measurement result.

In some implementations, aligning the first quality measurement and the second quality measurement based on the measurement period includes:
controlling, based on the measurement period, starting and pausing of the first quality measurement and/or starting and pausing of the second quality measurement, to align the first quality measurement and the second quality measurement.

In some implementations, determining the measurement period includes:
based on the configuration information required to perform the first quality measurement in the configuration information, determining a starting time and an ending time of the measurement; and
determining the measurement period based on the starting time and the ending time.

In some implementations, determining the measurement period based on the starting time and the ending time includes:
determining, based on the starting time and the ending time, the measurement period corresponding to the first quality measurement performed by an application layer; and
sending the starting time and the ending time to an access stratum through the application layer, and determining the measurement period corresponding to the second quality measurement performed by the access stratum.

In some implementations, after receiving the configuration information, the method further includes:
saving the configuration information; or
deleting a saved first measurement report corresponding to the first quality measurement; or
deleting saved configuration information required to perform the first quality measurement; or
deleting a saved second measurement report corresponding to the second quality measurement; or
deleting saved configuration information required to perform the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

In the present embodiment, the configuration information required for the first quality measurement and the second quality measurement is sent to the terminal, and the first quality measurement is activated. When the terminal determines to perform the second quality measurement associated with the first quality measurement, the first quality measurement and the second quality measurement is aligned, that is, the first quality measurement and the second quality measurement are measured simultaneously during the same time period, thereby achieving measurement alignment. This can be applied to QoE measurement and MDT measurement processes, thereby achieving alignment between the QoE measurement and the MDT measurement.

In a second aspect, a measurement alignment method provided in an embodiment of the present disclosure includes:
sending configuration information and current measurement status of a second quality measurement to a terminal, where the configuration information represents configuration information required to perform a first quality measurement and the second quality measurement;
receiving a service indication message sent by the terminal, and updating the current measurement status based on the service indication message to obtain updated measurement status; and
sending the updated measurement status to the terminal, to enable the terminal to perform the second quality measurement associated with the first quality measurement based on the updated measurement status when performing the first quality measurement.

In some implementations, receiving the service indication message sent by the terminal, and updating the current measurement status based on the service indication message to obtain the updated measurement status include:
if the current measurement status shows pausing and it is determined to perform the second quality measurement associated with the first quality measurement based on the service indication message, determining the updated measurement status as starting; or
if the current measurement status shows starting and it is determined to pause the second quality measurement associated with the first quality measurement based on the service indication message, determining the updated measurement status as pausing.

In some implementations, the current measurement status includes starting or pausing; and/or, reference information of the second quality measurement;
where the reference information is used to determine the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

In a third aspect, a measurement alignment method provided in an embodiment of the present disclosure includes:
receiving configuration information and current measurement status of a second quality measurement, where the configuration information represents configuration information required to perform a first quality measurement and the second quality measurement;
sending a service indication message to a network-side device to instruct the network-side device to update the current measurement status based on the service indication message to obtain updated measurement status;
receiving the updated measurement status, and performing the second quality measurement associated with the first quality measurement based on the updated measurement status when performing the first quality measurement.

In some implementations, performing the second quality measurement associated with the first quality measurement based on the updated measurement status when performing the first quality measurement includes:
if the update measurement status shows starting, performing the second quality measurement associated with the first quality measurement when performing the first quality measurement; or
if the update measurement status shows pausing, pausing the second quality measurement associated with the first quality measurement when performing the first quality measurement.

In some implementations, the current measurement status includes starting or pausing; and/or, reference information of the second quality measurement;
where the reference information is used to determine the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

In a fourth aspect, an embodiment of the present disclosure further provides a first type of terminal, including a memory, a transceiver and a processor; where the memory is configured to store a computer program; the transceiver is configured to transmit and receive data under control of the processor; and the processor is configured to read the computer program in the memory and perform any step of the method in the first aspect.

In a fifth aspect, an embodiment of the present disclosure further provides a network-side device, including a memory, a transceiver and a processor; where the memory is configured to store a computer program; the transceiver is configured to transmit and receive data under control of the processor; and the processor is configured to read the computer program in the memory and perform any step of the method in the second aspect.

In a sixth aspect, an embodiment of the present disclosure further provides a second type of terminal, including a memory, a transceiver and a processor; where the memory is configured to store a computer program; the transceiver is configured to transmit and receive data under control of the processor; and the processor is configured to read the computer program in the memory and perform any step of the method in the third aspect.

In a seventh aspect, an embodiment of the present disclosure further provides a measurement alignment apparatus, including:
a configuration receiving unit, configured to receive configuration information, and activate a first quality measurement based on the configuration information, where the configuration information represents configuration information required to perform the first quality measurement and a second quality measurement;
a measurement determining unit, configured to determine a measurement manner, where the measurement manner represents whether to perform the second quality measurement associated with the first quality measurement in a measurement period of the first quality measurement; and
a measurement alignment unit, configured to align the first quality measurement and the second quality measurement based on the measurement manner, and determine an aligned measurement result.

In an eighth aspect, an embodiment of the present disclosure further provides a measurement alignment apparatus, including:
a configuration status sending unit, configured to send configuration information and current measurement status of a second quality measurement to a terminal, where the configuration information represents configuration information required to perform a first quality measurement and the second quality measurement;
a measurement status updating unit, configured to receive a service indication message sent by the terminal, and update the current measurement status based on the service indication message to obtain updated measurement status; and
a measurement status sending unit, configured to send the updated measurement status to the terminal, to enable the terminal to perform the second quality measurement associated with the first quality measurement based on the updated measurement status when performing the first quality measurement.

In a ninth aspect, an embodiment of the present disclosure further provides a measurement alignment apparatus, including:
a configuration status receiving unit, configured to receive configuration information and current measurement status of a second quality measurement, where the configuration information represents configuration information required to perform a first quality measurement and the second quality measurement;
an indication message sending unit, configured to send a service indication message to a network-side device to instruct the network-side device to update the current measurement status based on the service indication message to obtain updated measurement status; and
a measurement alignment unit, configured to receive the updated measurement status, and perform the second quality measurement associated with the first quality measurement based on the updated measurement status when performing the first quality measurement.

In a tenth aspect, an embodiment of the present disclosure further provides a computer storage medium having a computer program stored thereon, where the computer program, when performed by a processor, implements steps of the method described in the first aspect, the second aspect, or the third aspect.

These aspects or other aspects in the present disclosure will be more concise and understandable in the description of the following embodiments.

### BRIEF DESCRIPTION OF DRAWINGS

In order to provide a clearer explanation of the technical solution in embodiments of the present disclosure, a brief introduction will be given to the accompanying drawings required for the description of the embodiments. It is obvious that the accompanying drawings described below are only for some embodiments of the present disclosure. For those ordinarily skilled in the art, other drawings can be obtained based on these drawings without creative efforts.
FIG. 1 is a flowchart of an implementation of a measurement alignment method provided in an embodiment of the present disclosure.
FIG. 2 is a flowchart of an implementation of a terminal measurement alignment method provided in an embodiment of the present disclosure.
FIG. 3 is a flowchart of an implementation of a measurement alignment method provided in an embodiment of the present disclosure.
FIG. 4 is a flowchart of an implementation of a measurement alignment method provided in an embodiment of the present disclosure.
FIG. 5 is a flowchart of a measurement alignment interaction between a terminal and a base station provided in an embodiment of the present disclosure.
FIG. 6 is a flowchart of an implementation of a based station-controlled measurement alignment method provided in an embodiment of the present disclosure.
FIG. 7 is a flowchart of an implementation of another base station-controlled measurement alignment method provided in an embodiment of the present disclosure.
FIG. 8 is a schematic diagram of a first type of terminal provided in an embodiment of the present disclosure.
FIG. 9 is a schematic diagram of a network-side device provided in an embodiment of the present disclosure.
FIG. 10 is a schematic diagram of a second type of terminal provided in an embodiment of the present disclosure.
FIG. 11 is a schematic diagram of a measurement alignment apparatus provided in an embodiment of the present disclosure.
FIG. 12 is a schematic diagram of a measurement alignment apparatus provided in an embodiment of the present disclosure.
FIG. 13 is a schematic diagram of a measurement alignment apparatus provided in an embodiment of the present disclosure.

### DESCRIPTION OF EMBODIMENTS

In order to clarify the purpose, technical solution, and advantages of the present disclosure, a further detailed description of the present disclosure will be provided below in conjunction with the accompanying drawings. Obviously, the described embodiments are only a part of the embodiments of the present disclosure, rather than all of them. Based on the embodiments in the present disclosure, all other embodiments obtained by ordinarily skilled persons in this field without creative efforts shall fall within the protection scope of the present disclosure.

The measurement alignment method provided in an embodiment of the present disclosure can be applied to both a terminal and a network-side device.

The technical solution provided in an embodiment of the present disclosure can be applied to various systems, especially 5G systems. For example, applicable systems may include a global system of mobile communications (Global System of Mobile, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide interoperability for Microwave Access, WiMAX) system, a 5G new radio (New Radio, NR) system, etc. All of these systems include a terminal device and a network device. The system can also include core network components, such as an evolved packet system (Evloved Packet System, EPS), a 5G system (5GS), etc.

Terminal devices involved in the embodiments of the present disclosure may refer to devices that provide voice and/or data connectivity to a user, handheld devices with wireless connection capabilities, or other processing devices connected to wireless modems. In different systems, the terminal devices may also vary in their names. For example, in the 5G system, the terminal device can be referred to as a user equipment (User Equipment, UE). A wireless terminal device can communicate with one or more core networks (Core Network, CN) via a radio access network (Radio Access Network, RAN). Wireless terminal devices can be mobile terminal devices, such as a mobile phone (also known as a "cellular" phone) and a computer with the mobile terminal devices, such as a portable, a pocket sized, a handheld, a computer built-in, or an in-vehicle mobile device, which exchange language and/or data with the radio access network, for example, devices such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), etc. The wireless terminal devices can also be referred to as a system, a subscriber unit (Subscriber Unit), a subscriber station (Subscriber Station), a mobile station (Mobile Station), a mobile (Mobile), a remote station (Remote Station), a access point (Access Point), a remote terminal (Remote Terminal), an access terminal (Access Terminal), a user terminal (User Terminal), a user agent (User Agent), and a user device (User Device), which are not limited in the embodiment of the present disclosure.

The network device involved in an embodiment of the present disclosure may be a base station, which may include multiple cells providing services to the terminal. Depending on a specific application scenario, the base station can also be referred to as an access point, or it can be a device in an access network that communicates with the wireless terminal device through one or more sectors over an air interface, or other names. The network device can be used to exchange received air frames with internet protocol (Internet Protocol, IP) packets, acting as a router between the wireless terminal device and the rest of the access network which may include an Internet Protocol (IP) communication network. The network device can also coordinate an attribute management of the air interface. For example, the network device involved in the embodiment of the present disclosure may be a network device (Base Transceiver Station, BTS) in the global system for mobile communications (Global System for Mobile communications, GSM) or the code division multiple access (Code Division Multiple Access, CDMA), a network device (NodeB) in the wideband code division multiple access (Wide-band Code Division Multiple Access, WCDMA), an evolutional network device (evolutional Node B, eNB or e-NodeB) in the Long Term Evolution (Long Term Evolution, LTE) system, a 5G base station (gNB) in a 5G network architecture (Next Generation System), a home evolved base station (Home evolved Node B, HeNB), a relay node (Relay Node), a Femto (Femto), a Pico (Pico), etc., which are not limited in the embodiment of the present disclosure. In some network structures, the network devices may include a centralized unit (Centralized Unit, CU) node and a distributed unit (Distributed Unit, DU) node that can also be arranged geographically separately.

Network devices and terminal devices can each use one or more antennas for Multi Input Multi Output (Multi Input Multi Output, MIMO) transmission, which can be single user MIMO (Single User MIMO, SU-MIMO) or multiple user MIMO (Multiple User MIMO, MU-MIMO). According to the form and number of antenna combinations, the MIMO transmission can be 2D-MIMO, 3D-MIMO, FD-MIMO, or massive MIMO, as well as diversity transmission, precoding transmission, beamforming transmission, etc.

The term "and/or" in the embodiments of the present disclosure describes the association between associated objects, and indicate that there can be three types of relationships. For example, A and/or B can represent three situations: A exists alone, A and B exist simultaneously, and B exists alone. The character "/" generally indicates that the associated objects before and after the character are in an "or" relationship.

The term "multiple" in embodiments of the present disclosure refers to two or more, other quantifiers are similar to it.

The application scenario described in an embodiment of the present disclosure is for a clearer explanation of the technical solution provided in an embodiment of the present disclosure, and does not constitute a limitation on the technical solution provided in an embodiment of the present disclosure. Those of ordinary skill in the art know that with the emergence of new application scenarios, the technical solution provided in an embodiment of the present disclosure is also applicable to similar technical problems.

The following will provide a clear and complete description of the technical solution in an embodiment of the present disclosure in conjunction with the accompanying drawings in an embodiment of the present disclosure. Obviously, the described embodiments are only a part of embodiments of the present application and not all of them. Based on the embodiments in the present disclosure, all other embodiments obtained by ordinarily skilled persons in this field without creative efforts shall fall within the protection scope of the present disclosure.

Embodiment 1: the UE receives a broadcast service in an idle state or an inactive state and generates a QoE (Quality of Experience, Quality of Experience) measurement report. In order to better analyze the QoE measurement report, it is often necessary to obtain an MDT (Minimization of Drive-Test, Minimization of Drive-Test) measurement result recorded by the UE during the same time period, that is, the MDT measurement report and the QoE measurement report that are aligned. However, in the prior art, it is impossible to achieve temporal consistency in generating the MDT report and the QoE measurement report in the idle state and the inactive state, which means that recording in the same time period cannot be guaranteed. This is because the QoE measurement will not be generated until the service is initiated; as long as the MDT report is configured for the UE, the UE will immediately start measurement and record the report.

The QoE measurement involved in the present disclosure is briefly introduced below:
The protocol defines two types of QoE measurements. One is signaling based (Signalling based), which has a process that: operation administration and maintenance (Operation Administration and Maintenance, OAM) sends a QoE configuration to a core network (Core Network, CN), the core network sends the QoE configuration to a Radio Access Network (Radio Access Network, RAN) side, and the RAN side then forwards the QoE configuration to the UE, in this case, the configuration is specific to the UE. The other is Management based (Management based), which has a process that: the OAM directly sends the QoE configuration to the RAN side, and the RAN side in turn forwards the QoE configuration to the UE, in this case, the configuration is currently intended for multiple UEs. In the system framework of both signaling based and management based measurement configurations, QoE configurations sent by the RAN side to the UE are of the same process, and configuration parameters are also the same, and the transmission to the UE is performed through radio resource control (Radio Resource Control, RRC) signaling.

QoE configuration parameters sent by the base station to the UE are briefly listed below:
1) Application layer measurement configuration ID, an air interface being used to uniquely identify a reference of a measurement;
2) Application layer measurement configuration container, a QoE configuration file being defined by an application layer service;
3) Service type, a service type being defined for performing a QoE measurement, including streaming media, multimedia telephony services for Ims (Multimedia Telephony Service for Ims, MTSI), multicast/broadcast services (Multicast/Broadcast Services, MBS) services, etc.;
4) MDT alignment information, including MDT trace ID (trace identifier) information, and representing an MDT measurement result aligned with the QoE measurement, where for a QoE measurement report and an MDT measurement report, the measurement is intended for information in the same time period, which can be compared and used for analysis;
5) Service starting and stopping indications, where if the indications are sent to the UE, the UE will notify the base station when the service starts or stops.

After receiving the QoE configuration through the RRC message, the UE's AS (Access Stratum, Access Stratum) layer will send the QoE configuration to the application layer through a directory defined by an AT command (Attention command), including parameters such as a service type, a QoE reference, and a QMC configuration file. When a service of the service type corresponding to the configuration starts to occur, the application layer begins to measure based on the configuration file and generates a measurement QoE report according to a configuration condition. Once the QoE measurement report is generated, the application layer of the UE sends the QoE report to the UE's AS layer through the AT command command, and the UE's AS sends the QoE report to the RAN through the RRC message. The RAN will send the report to a corresponding server corresponding to an IP address defined in the configuration file. Thus, a collection process of the QoE configuration and the measurement report is completed.

Communications between a current network and the UE is mostly in the form of ordinary unicast, which is a one-to-one manner. In order to support a one-to-many communication manner and save network resource consumption, multicast and broadcast manners, namely MBS (Multicast/Broadcast Services, Multicast/Broadcast Services), have been introduced.

For a multicast service, the same service and content are provided simultaneously for a specified group of users, the UE can receive the multicast service in a connected state. For the base station that supports multicast, the base station may use a set of common resources to provide the service to a specific group of UEs. When the UE switches to a base station that does not support multicast, due to incapability to establish an MRB (MBS Radio Bearer, Radio Bearer), the provision of the service continues only through a UE-specific DRB (Data Radio Bearer, Data Radio Bearer), that is, delivering a multicast service content through a unicast manner.

For a broadcast service, the same service and content are provided to all UEs within a specific area, and the UEs can receive the broadcast service in an idle state, an inactive state, or a connected state. When the UE moves in the connected state, it is necessary to ensure continuity of a UE broadcast service and select a cell that supports the same service as a target cell.

Existing base stations can interact with a support situation for multicast and broadcast in neighboring cells through interfaces, including whether to support broadcast and/or multicast, as well as a specific service type. The service type can use a TMGI (Temporary Mobile Group Identity, Temporary Mobile Group Identity) or an SAI (Service Area Identity, Service Area Identity).

To enhance user perception of the MBS service, the QoE measurement can be configured for the MBS service. The UE receives multicast and broadcast services in the connected state, and can directly report to the network after generating the QoE measurement reports. The UE receives the broadcast service in the idle state or the inactive state, and after generation of a QoE measurement report, the QoE measurement report needs to be temporarily stored before being reported to the network after the UE's connection to the connected state.

The MDT measurement involved in the present disclosure is briefly explained below.

The MDT measurement includes an immediate MDT (immediate Minimization of Drive-Test) measurement and a logged MDT (logged Minimization of Drive-Test) measurement.

Immediate MDT: the MDT measurement and reporting in the connected state, with a RRM measurement mechanism being reused to collect measurement results from the base station and the UE for reporting.

Logged MDT: When in the connected state, the base station sends a Logged MDT configuration to the UE. After the UE enters the idle state, the MDT measurement is performed and stored. When the UE enters the connected state again, the base station is notified to obtain the recorded measurement report.

After entering the connected state, the UE that supports an MBS function will trigger sending of a MBSInterestIndication message to the base station in the following scenarios:
1) Entering or leaving a broadcast service area;
2) A broadcast session starts or ends;
3) MBS services that the UE is interested in change;
4) MBSs broadcast and unicast priority changes;
5) PCell Parameterized Cell (Parameterizedcell, Pcell) broadcasts SIB21 (System Information Block, System Information Block) changes;
where the mbs-ServiceList IE in the MBSInterestIndication (Interest Indication) message indicates the MBS broadcast service that is currently being received or is interested in receiving by the UE, specifically TMGI information. Based on the TMGI information carried, the MBS broadcast service that is currently being received or is interested in receiving by the UE can be known.

At present, when the QoE measurement is configured on the management station, if MDT alignment information is carried, the base station needs to send, to the management station, the QoE measurement report and the MDT measurement report that are aligned, that is to say, the QoE measurement report and the MDT measurement report need to include measurement results in the same time period. For the QoE measurement in the connected state, the base station can be notified when a related service of the UE starts or stops, and the base station can also configure the MDT measurement accordingly to meet a requirement that the QoE measurement and the MDT measurement contain the same time period. For the QoE measurement in the idle state and the inactive state, such as the QoE measurement for the broadcast service, the base station does not know when the UE will start receiving the broadcast service or when the QoE measurement will be generated, making it impossible to configure the MDT measurement accordingly and align the QoE measurement with the MDT measurement.

In order to solve the above technical problems, an embodiment of the present disclosure provides a measurement alignment method. This design has a core idea to send configuration information required for a first quality measurement and a second quality measurement to a terminal, and activate the first quality measurement. When the terminal determines to perform the second quality measurement associated with the first quality measurement, the first quality measurement and the second quality measurement are aligned, that is, the first quality measurement and the second quality measurement are measured simultaneously during the same time period, thereby achieving measurement alignment. This can be applied to QoE measurement and MDT measurement processes, thereby achieving alignment between the QoE measurement and the MDT measurement.

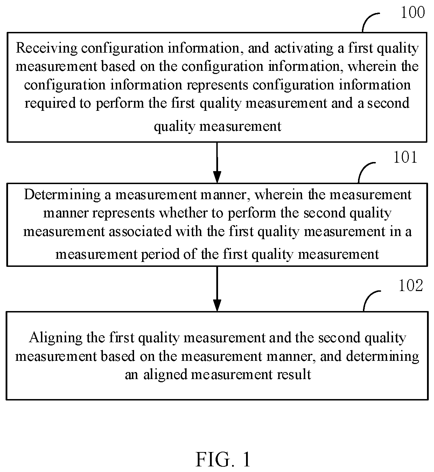

As shown in FIG. 1, an embodiment of the present disclosure provides a measurement alignment method, applied to a terminal, for achieving measurement alignment through the terminal. A specific implementation process is as follows.

At step 100, configuration information is received, and a first quality measurement is activated based on the configuration information, where the configuration information represents configuration information required to perform the first quality measurement and a second quality measurement.

In some embodiments, the configuration information in the embodiment of the present disclosure includes:
1) first configuration information required to perform the first quality measurement;
   where the first configuration information includes one or more of the following:
      a) first quality reference information; including but not limited to a QoE reference or a QoE measurement configuration reference with a mapping relationship;
      b) a service type; used for indicating the QoE measurement of the broadcast service;
      c) service list information; including but not limited to TMGI list information, indicating which QoE measurements of the TMGI need to be collected;
      d) a starting time and an ending time of a service; for example, starting and ending notification indications of a QoE session of the TMGI service related to the broadcast (carrying the starting time and the ending time of the QoE session of the TMGI service), the application layer needs to notify the AS layer when the QoE session of the TMGI service related to the broadcast starts or ends;
      e) time point information; indicating an absolute time point of a current time;
      f) a measurement period; indicating that the terminal can perform QoE measurement collection within a certain time interval;
      g) a measurement duration; indicating how long the terminal can perform QoE measurement collection;
      h) a QMC configuration file (QMC configuration file);
      i) a QoE collection entity address (QoE collection entity address), an IP address to which a QMC report will be transmitted.
   In some implementations, the QoE measurement result sent to the base station is used for QoE analysis and optimization by the base station.
2) second configuration information required to perform the second quality measurement;
3) an association between the first quality measurement and the second quality measurement;
   where the association between the first quality measurement and the second quality measurement includes but is not limited to an association between reference information of the first quality measurement and the second quality measurement.

In some implementations, the first quality measurement in the present embodiment includes but is not limited to the QoE measurement, and the second quality measurement in the present embodiment includes but is not limited to the MDT measurement.

In some implementations, the purpose of activating the first quality measurement in the present embodiment is to enable the terminal to perform the first quality measurement, but the specific time for starting the execution of the first quality measurement needs to be determined based on a measurement manner.

In some implementations, the specific steps for activating the first quality measurement based on the configuration information are as follows:
receiving the configuration information through an access stratum and sending the configuration information required to perform the first quality measurement in the configuration information to an application layer; activating the first quality measurement through the application layer, where activating the first quality measurement represents that the first quality measurement is performable.

In an implementation, the terminal receives the configuration information through the access stratum, performs the second quality measurement through the access stratum, and performs the first quality measurement through the application layer.

At step 101, a measurement manner is determined, where the measurement manner represents whether to perform the second quality measurement associated with the first quality measurement in a measurement period of the first quality measurement.

In an implementation, the measurement manner in the present embodiment includes: performing the second quality measurement associated with the first quality measurement or not performing the second quality measurement associated with the first quality measurement.

For example, when the UE's AS layer receives the starting notification of the QoE session of the TMGI service related to the broadcast, if the QoE measurement corresponding to the received TMGI service is associated with a second quality measurement, the UE needs to perform the second quality measurement.

The measurement period in the present embodiment includes a measurement starting time and a measurement ending time.

In some implementations, the measurement period is determined in the embodiment according to the following manners:
based on configuration information required to perform the first quality measurement in the configuration information, determining a starting time and an ending time of the measurement; and determining the measurement period based on the starting time and the ending time.

In some implementations, the measurement period corresponding to the first quality measurement performed by the application layer is determined based on the starting time and the ending time; and the starting time and the ending time are sent to the access stratum through the application layer, and the measurement period corresponding to the second quality measurement performed by the access stratum is determined. Due to sharing of the measurement period between the application layer and the access stratum, it is possible to align the first quality measurement performed by the application layer with the second quality measurement performed by the access stratum.

In some implementations, starting and pausing of a timer are controlled based on the starting time and the ending time; the measurement period is determined based on the starting and pausing of the timer. In an implementation, the starting and pausing of the measurement can be controlled by the timer. When the timer starts, the execution of the second quality measurement begins, and when the timer pauses, the second quality measurement is paused. In the present implementation, the starting of the timer includes two meanings: one is to start the timer if the status of the timer shows not being started when determining to start the timer; the other is to resume running the timer if the status of the timer shows being paused when determining to start the timer.

In an implementation, when the UE's AS layer receives the starting notification of the QoE session of the TMGI service related to the broadcast and the QoE measurement corresponding to the received TMGI service is associated with a second quality measurement, the UE starts to perform the second quality measurement, and specifically perform any one of the following steps through the timer:
a) if a T330 timer is not started before the UE's AS layer receives the starting notification of the QoE session of the TMGI service related to the broadcast, start the T330 timer. A length can also be determined based on the measurement duration in the first configuration information, for example, the length is a logging duration (logging duration) in the MDT configuration;
b) perform recording according to an existing logged MDT manner before the T330 timer expires;
c) in case of processing if the T330 timer expires, perform according to an existing logged MDT processing manner;
d) in case of processing if the storage space is full, perform according to the existing logged MDT processing manner;
e) if a logged MDT measurement aligned with a QoE measurement of a broadcast service is in a pausing state, resume the MDT measurement;
f) if the T330 timer for the logged MDT measurement aligned with the QoE measurement of the broadcast service is in the pausing state, resume running the T330 timer.

In an implementation, when the UE's AS layer receives the stopping notification of the QoE session of the TMGI service related to the broadcast, if the corresponding TMGI service is conducting an aligned MDT measurement, the UE needs to pause the MDT measurement. For example, the T330 timer is paused, and continues to run after the corresponding broadcast service is started. Alternatively, the logged MDT measurement is paused, and is resumed after the corresponding broadcast service is started.

In some implementations, control, based on the measurement period, starting and pausing of the first quality measurement and/or starting and pausing of the second quality measurement, to align the first quality measurement and the second quality measurement. In an implementation, it is possible to directly control the starting and the pausing of the first quality measurement, and/or the starting and the pausing of the second quality measurement to align the first quality measurement and the second quality measurement. In an implementation, it is possible to directly control the starting and the pausing of the first quality measurement and/or the starting and the pausing of the second quality measurement, and there is no need to perform controlling through the timer.

At step 102, the first quality measurement and the second quality measurement are aligned based on the measurement manner, and an aligned measurement result is determined.

In some implementations, if the measurement manner represents to perform the second quality measurement associated with the first quality measurement in the measurement period of the first quality measurement, aligning the first quality measurement and the second quality measurement based on the measurement period, and determining the aligned measurement result.

In some implementations, after receiving the configuration information, one or more of the following actions are performed.
(1) Save the configuration information.
   Before saving the configuration information, if a first measurement report corresponding to the first quality measurement has already been saved, it is also necessary to delete the saved first measurement report corresponding to the first quality measurement. If the configuration information required to perform the first quality measurement has already been saved, delete the saved configuration information required for the first quality measurement. If a second measurement report corresponding to the second quality measurement has already been saved, delete the saved second measurement report corresponding to the second quality measurement. If the configuration information required to perform the second quality measurement has already been saved, delete the saved configuration information required to perform the second quality measurement.
(2) When the first measurement report corresponding to the first quality measurement has been saved, delete the saved first measurement report corresponding to the first quality measurement.

In some implementations, when the access stratum has already saved the first measurement report corresponding to the first quality measurement, delete the saved first measurement report corresponding to the first quality measurement, and the application layer can also be notified to delete the first measurement report corresponding to the first quality measurement (including the first measurement report that has not yet been sent to a terminal access stratum).

For example, if the terminal access stratum has already recorded at least one QoE report in the connected state, the idle state, or the inactive state, delete the at least one QoE report in the connected state, the idle state, or the inactive state. The access stratum notifies the application layer to delete the at least one QoE report in the connected state, the idle state, or the inactive state (including the QoE report that has not yet been sent to the terminal access stratum).

(3) When the configuration information required to perform the first quality measurement has been saved, delete the saved configuration information required for the first quality measurement.

In some implementations, when the access stratum has already saved the configuration information required to perform the first quality measurement, delete the saved configuration information required for the first quality measurement, and the application layer can also be notified to delete the configuration information required for the first quality measurement.

For example, if the terminal access stratum has already saved the configuration information required for at least one QoE measurement in the connected state, the idle state, or the inactive state, delete the saved configuration information required for the at least one QoE measurement in the connected state, the idle state, or the inactive state. And the access stratum notifies the application layer to delete configuration information required for the at least one QoE measurement in the connected state, the idle state, or the inactive state.

(4) When the second measurement report corresponding to the second quality measurement has been saved, delete the saved second measurement report corresponding to the second quality measurement.

In an implementation, when the terminal access stratum has already saved the second measurement report corresponding to the second quality measurement, delete the saved second measurement report corresponding to the second quality measurement. For example, when the UE's AS has already saved a logged MDT report, the saved logged MDT report will be deleted.

(5) When the configuration information required to perform the second quality measurement has been saved, delete the saved configuration information required to perform the second quality measurement.

In an implementation, when the terminal access stratum has already saved the configuration information required to perform the second quality measurement, delete the saved configuration information required for the second quality measurement. For example, when the UE's AS has already saved the configuration information required for the logged MDT, the saved configuration information required for the logged MDT will be deleted.

In some implementations, when the UE's AS layer receives a deletion of the QoE measurement, if there is an aligned MDT measurement, the UE deletes the aligned logged MDT measurement report and the configuration information required for the logged MDT.

In some implementations, after the terminal access stratum in the present embodiment saves the configuration information required to perform the second quality measurement and the configuration information required to perform the first quality measurement, the timer is not started at this time. For example, the UE's AS saves the received configuration information required for the MDT measurement and the QoE measurement. Unlike existing protocols, it is possible to select to not to start the T330 timer at this time.

When the first quality measurement is the QoE measurement and the second quality measurement is the MDT measurement, the present embodiment is implemented by the terminal, to solve the alignment of the logged MDT with the QoE measurement of the broadcast service in the idle state and the inactive state. An implementation is to send the configuration information required to perform the QoE measurement, the configuration information required to perform the logged MDT measurement, and the association between the first quality measurement and the second quality measurement to the terminal together. After receiving the configuration information, the terminal application layer sends the configuration information required to perform the QoE measurement to the application layer, to instruct the application layer to activate the QoE measurement. However, at this time, the application layer does not immediately start performing the QoE measurement, and when the terminal access stratum receives the starting notification of the QoE session of the TMGI service related to the broadcast, it is determined whether to perform the logged MDT measurement associated with the QoE measurement. If yes, the starting time and the ending time of the measurement are determined based on the configuration information required to perform the first quality measurement in the configuration information, and thus the measurement period is determined. During the measurement period, the starting and the pausing of the QoE measurement and/or the logged MDT measurement are controlled to align the QoE measurement and the logged MDT measurement. It should be noted that the application layer performs the QoE measurement and the access stratum performs the logged MDT measurement. In order to align the QoE measurement and the logged MDT measurement, it is necessary to send the starting time and the ending time of the measurement included in the configuration information required for the QoE measurement and received by the application layer to the access stratum, to instruct the application layer and the access stratum to perform quality measurements during the same measurement period, thereby achieving the alignment of the QoE measurement with the logged MDT measurement.

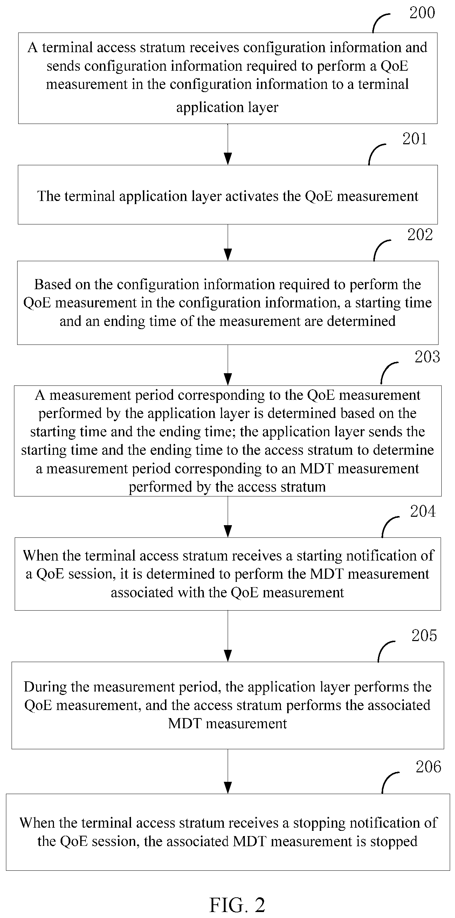

As shown in FIG. 2, the present embodiment provides an implementation process for a terminal measurement alignment method, the specific contents are as follows.

At step 200: a terminal access stratum receives configuration information and sends configuration information required to perform a QoE measurement in the configuration information to a terminal application layer;
where the configuration information includes first configuration information required to perform the QoE measurement, second configuration information required to perform an MDT measurement, and an association between the QoE measurement and the MDT measurement.

At step 201: the terminal application layer activates the QoE measurement;
where the activation of the QoE measurement indicates that the QoE measurement is performable.

At step 202: based on the configuration information required to perform the QoE measurement in the configuration information, a starting time and an ending time of the measurement are determined.

At step 203: a measurement period corresponding to the QoE measurement performed by the application layer is determined based on the starting time and the ending time; the application layer sends the starting time and the ending time to the access stratum to determine a measurement period corresponding to an MDT measurement performed by the access stratum.

At step 204: when the terminal access stratum receives a starting notification of a QoE session, it is determined to perform the MDT measurement associated with the QoE measurement.

At step 205: during the measurement period, the application layer performs the QoE measurement, and the access stratum performs the associated MDT measurement.

At step 206: when the terminal access stratum receives a stopping notification of the QoE session, the associated MDT measurement is stopped.

In some implementations, the present embodiment also provides a measurement alignment method applied to a network-side device. The method is designed in a core idea to add an air interface message, that is, to add measurement status of the second quality measurement, giving an indication to the terminal to determine whether to perform the second quality measurement based on the measurement status. By sending configuration information and current measurement status to the terminal together, when receiving a service indication message of the terminal, a determination is made with regard to whether to update the current measurement status based on the service indication message, and then the updated measurement status is sent to the terminal, so that when the terminal performs the first quality measurement, it performs the second quality measurement associated with the first quality measurement based on the updated measurement status, thereby aligning the first quality measurement and the second quality measurement.

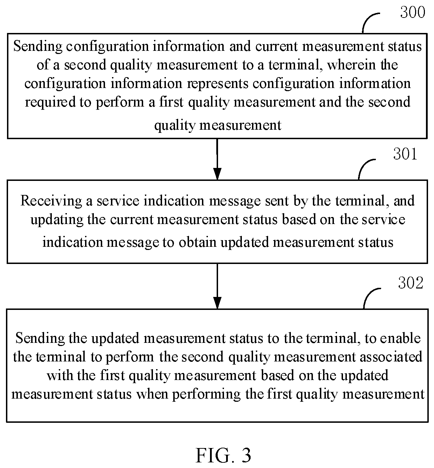

As shown in FIG. 3, the present embodiment provides a measurement alignment method, which is applied to a network-side device. A specific implementation process of the method is as follows.

At step 300, configuration information and current measurement status of a second quality measurement are sent to a terminal, where the configuration information represents configuration information required to perform a first quality measurement and the second quality measurement.

In some implementations, the configuration information in the present embodiment includes: first configuration information required to perform the first quality measurement; second configuration information required to perform the second quality measurement; an association between the first quality measurement and the second quality measurement.

In some implementations, the first configuration information includes one or more of the following: first quality reference information; a service type; service list information; a starting time and an ending time of a service; time point information; a measurement period; a measurement duration.

In some embodiments, the configuration information in the embodiment of the present disclosure includes:
1) first configuration information required to perform the first quality measurement;
   where the first configuration information includes one or more of the following:
      a) first quality reference information; including but not limited to a QoE reference or a QoE measurement configuration reference with a mapping relationship;
      b) a service type; used for indicating the QoE measurement of the broadcast service;
      c) service list information; including but not limited to TMGI list information, indicating which QoE measurements of the TMGI need to be collected;
      d) a starting time and an ending time of a service; for example, starting and ending notification indications of a QoE session of the TMGI service related to the broadcast (carrying the starting time and the ending time of the QoE session of the TMGI service), the application layer needs to notify the AS layer when the QoE session of the TMGI service related to the broadcast starts or ends;
      e) time point information; indicating an absolute time point of a current time;
      f) a measurement period; indicating that the terminal can perform a QoE measurement collection within a certain time interval;
      g) a measurement duration; indicating how long the terminal can perform QoE measurement collection;
      h) a QMC configuration file (QMC configuration file);
      i) a QoE collection entity address (QoE collection entity address), an IP address to which a QMC report will be transmitted.
   In some implementations, the QoE measurement result sent to the base station is used for QoE analysis and optimization by the base station.
2) second configuration information required to perform the second quality measurement;
3) an association between the first quality measurement and the second quality measurement;
   where the association between the first quality measurement and the second quality measurement includes but is not limited to an association between reference information of the first quality measurement and the second quality measurement.

In some implementations, the first quality measurement in the present embodiment includes but is not limited to the QoE measurement, and the second quality measurement in the present embodiment includes but is not limited to the MDT measurement.

In some implementations, the measurement status includes starting or pausing; and/or, reference information of the second quality measurement; where the reference information is used to determine the second quality measurement. In an implementation, the current measurement status includes starting or pausing; and/or, reference information of the second quality measurement; or updated measurement status includes starting or pausing; and/or reference information of the second quality measurement.

In an implementation, the measurement status (including current measurement status or updated measurement status) includes but is not limited to one or more of the following:
a) reference information of the second quality measurement;
   including but not limited to at least one of a trace reference (trace reference) or trace Recording SessionRef (trace Recording SessionRef).
b) starting or pausing;
   where the starting includes two meanings, one is to start the second quality measurement, and the other is to resume the second quality measurement. The pausing includes two meanings, one refers to temporarily stopping the second quality measurement, and the other refers to stopping the second quality measurement.

In an implementation, the UE receives configuration information and current measurement status. If the current measurement status shows starting, operational steps of an existing protocol are performed. If the current measurement status shows pausing, the pausing can be achieved through one or more of the following manners:
Manner 1), the current measurement status of the second quality measurement is set to pausing;
Manner 2), a T330 timer is started normally and is paused immediately;
Manner 3), the T330 timer is not started.

At step 301, a service indication message sent by the terminal is received, and the current measurement status is updated based on the service indication message to obtain updated measurement status.

In some implementations, the updated measurement status is obtained in a manner of:
if the current measurement status shows pausing and it is determined to perform the second quality measurement associated with the first quality measurement based on the service indication message, determining the updated measurement status as starting; or
if the current measurement status shows starting and it is determined to pause the second quality measurement associated with the first quality measurement based on the service indication message, determining the updated measurement status as pausing.

In an implementation, by receiving a measurement message sent by a core network, the network-side device determines whether to perform an aligned second quality measurement for TMGI of a respective broadcast service performed by a UE. And then based on a service carried in the service indication message, a determination is made with regard to whether to perform the second quality measurement associated with the first quality measurement of the service. For example, the network-side device receives QoE measurements, sent by the core network, needed for TMGI1 and TMGI2 of broadcast services performed by the UE, and meanwhile collects an aligned MDT measurement result for the TMGI1 of the broadcast service. That is, the MDT measurement needs to be performed only for the TMGI1, not for the TMGI2.

At step 302, the updated measurement status is sent to the terminal, to enable the terminal to perform the second quality measurement associated with the first quality measurement based on the updated measurement status when performing the first quality measurement.

Taking the first quality measurement being a QoE measurement and the second quality measurement being an MDT measurement as an example, in the present embodiment, the network-side device can send all the received configuration information to the UE together, where the configuration information is sent by the core network or a management station and is required for the QoE measurement and the MDT measurement related to the broadcast of the UE, but the current measurement status of the aligned MDT shows pausing. After receiving the service indication message (such as an MBS Interest Indication message) sent by the UE, the network-side device resumes or pauses the corresponding MDT measurement based on the QoE measurement of the service that starts. In order to add an air interface message of the current measurement status for the MDT measurement, it may show the starting or the pausing. The network-side device sends an indication message to the UE to indicate measurement status of the MDT, where the indication message can be sent in the form of adding a new message or carrying in an existing message. If the UE receives an indication message indicating that the MDT measurement status shows pausing, current logged MDT measurement status can be set as pausing, or a T330 timer is paused while it is running. If the UE receives an indication message indicating that the MDT measurement status shows starting, current logged MDT measurement status can be set as starting, or running of the T330 timer can be started when it is paused, or the T330 timer can be started when it is not started.

In some implementations, the present embodiment also provides a measurement alignment method applied to a terminal. The method is designed in a core idea to add an air interface message in the network-side device, that is, to add measurement status of the second quality measurement, giving an indication to the terminal to determine whether to perform the second quality measurement based on the measurement status. The terminal determines the current measurement status of the second quality measurement by receiving the configuration information and the current measurement status, and sends the service indication message to the network-side device, so that the network-side device determines, based on the service indication message, whether to update the current measurement status, and then sends the updated measurement status to the terminal. The terminal receives the updated measurement status and, when performing the first quality measurement, performs the second quality measurement associated with the first quality measurement based on the updated measurement status, thereby aligning the first quality measurement and the second quality measurement.

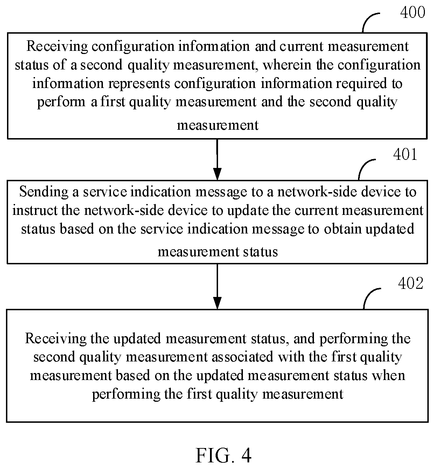

As shown in FIG. 4, the present embodiment provides a measurement alignment method, which is applied to a terminal. A specific implementation process of the method is as follows.

At step 400, configuration information and current measurement status of a second quality measurement are received, where the configuration information represents configuration information required to perform a first quality measurement and the second quality measurement.

In some implementations, the configuration information in the present embodiment includes: first configuration information required to perform the first quality measurement; second configuration information required to perform the second quality measurement; an association between the first quality measurement and the second quality measurement.

In some implementations, the first configuration information includes one or more of the following: first quality reference information; a service type; service list information; a starting time and an ending time of a service; time point information; a measurement period; a measurement duration.

In some embodiments, the configuration information in the embodiment of the present disclosure includes:
1) first configuration information required to perform the first quality measurement;
   where the first configuration information includes one or more of the following:
      a) first quality reference information; including but not limited to a QoE reference or a QoE measurement configuration reference with a mapping relationship;
      b) a service type; used for indicating the QoE measurement of the broadcast service;
      c) service list information; including but not limited to TMGI list information, indicating which QoE measurements of the TMGI need to be collected;
      d) a starting time and an ending time of a service; for example, starting and ending notification indications of a QoE session of the TMGI service related to the broadcast (carrying the starting time and the ending time of the QoE session of the TMGI service), the application layer needs to notify the AS layer when the QoE session of the TMGI service related to the broadcast starts or ends;
      e) time point information; indicating an absolute time point of a current time;
      f) a measurement period; indicating that the terminal can perform QoE measurement collection within a certain time interval;
      g) a measurement duration; indicating how long the terminal can perform QoE measurement collection;
      h) a QMC configuration file (QMC configuration file);
      i) a QoE collection entity address (QoE collection entity address), an IP address to which a QMC report will be transmitted.
   In some implementations, the QoE measurement result sent to the base station is used for QoE analysis and optimization by the base station.
2) second configuration information required to perform the second quality measurement;
3) an association between the first quality measurement and the second quality measurement;
   where the association between the first quality measurement and the second quality measurement includes but is not limited to an association between reference information of the first quality measurement and the second quality measurement.

In some implementations, the first quality measurement in the present embodiment includes but is not limited to the QoE measurement, and the second quality measurement in the present embodiment includes but is not limited to the MDT measurement.

In some implementations, the measurement status includes starting or pausing; and/or, reference information of the second quality measurement; where the reference information is used to determine the second quality measurement. In an implementation, the current measurement status includes starting or pausing; and/or, reference information of the second quality measurement; or updated measurement status includes starting or pausing; and/or reference information of the second quality measurement.

In an implementation, the measurement status (including current measurement status or updated measurement status) includes but is not limited to one or more of the following:
a) reference information of the second quality measurement;
   including but not limited to at least one of a trace reference (trace reference) or trace Recording SessionRef (trace Recording SessionRef).
b) starting or pausing;
   where the starting includes two meanings, one is to start the second quality measurement, and the other is to resume the second quality measurement. The pausing includes two meanings, one refers to temporarily stopping the second quality measurement, and the other refers to stopping the second quality measurement.

In an implementation, the UE receives configuration information and current measurement status. If the current measurement status shows starting, operational steps of an existing protocol are performed. If the current measurement status shows pausing, the pausing can be achieved through one or more of the following manners:
Manner 1), the current measurement status of the second quality measurement is set to pausing;
Manner 2), a T330 timer is started normally and is paused immediately;
Manner 3), the T330 timer is not started.

At step 401, a service indication message is sent to a network-side device to instruct the network-side device to update the current measurement status based on the service indication message to obtain updated measurement status.

At step 402, the updated measurement status is received, and the second quality measurement associated with the first quality measurement is performed based on the updated measurement status when performing the first quality measurement.

Taking the first quality measurement being a QoE measurement and the second quality measurement being an MDT measurement as an example, in the present embodiment, the network-side device can send all the received configuration information to the UE together, the configuration information is sent by the core network or a management station and is required for the QoE measurement and the MDT measurement related to the broadcast of the UE, but the current measurement status of the aligned MDT shows pausing. The UE reports the service indication message (such as an MBS Interest Indication message), the corresponding MDT measurement is resumed or paused based on the QoE measurement of the service that starts. In order to add an air interface message of the current measurement status for the MDT measurement, it may show the starting or the pausing. The network-side device sends an indication message to the UE to indicate measurement status of the MDT, where the indication message can be sent in the form of adding a new message or carrying in an existing message. If the UE receives an indication message indicating that the measurement status of the MDT shows pausing, current logged MDT measurement status can be set as the pausing, or a T330 timer is paused while it is running. If the UE receives an indication message indicating that the MDT measurement status shows starting, the current logged MDT measurement status can be set as the starting, or running of the T330 timer can be started when it is paused, or the T330 timer can be started when it is not started.

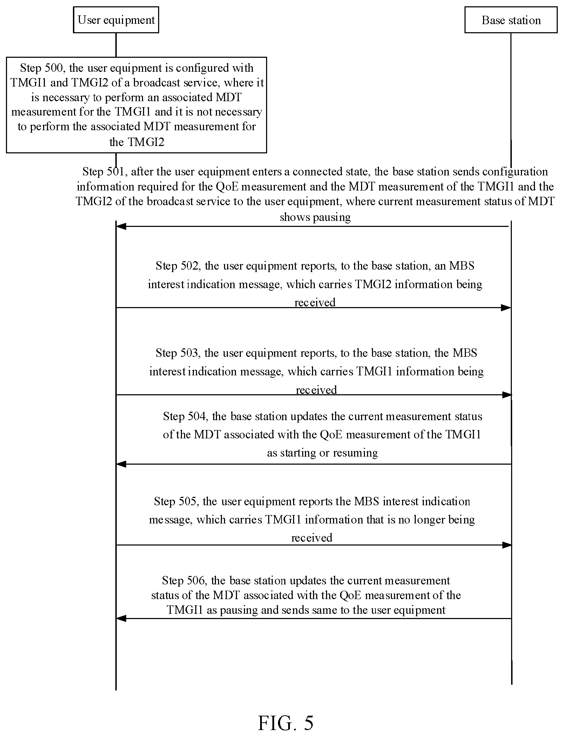

As shown in FIG. 5, an embodiment of the present disclosure provides a measurement alignment interaction process between a terminal and a base station. Taking a first quality measurement being a QoE measurement, a second quality measurement being an MDT measurement and a service indication message being an MBS interest indication message as an example, a specific implementation process of the method is as follows.

At step 500, the UE is configured with TMGI1 and TMGI2 of a broadcast service, where it is necessary to perform an associated MDT measurement for the TMGI1 and it is not necessary to perform the associated MDT measurement for the TMGI2.

At step 501, after the UE enters a connected state, the base station sends configuration information required for the QoE measurement and the MDT measurement of the TMGI1 and the TMGI2 of the broadcast service to the UE, where current measurement status of MDT shows pausing.

At step 502, the UE reports, to the base station, an MBS interest indication message, which carries TMGI2 information being received;
where since it is not necessary to perform the associated MDT measurement for the TMGI2, the base station does not update the current measurement status of the associated MDT.

At step 503, the UE reports, to the base station, the MBS interest indication message, which carries TMGI1 information being received.

At step 504, the base station updates the current measurement status of the MDT associated with the QoE measurement of the TMGI1 as starting or resuming.

At step 505, the UE reports the MBS interest indication message, which carries the TMGI1 information that is no longer being received.

At step 506, the base station updates the current measurement status of the MDT associated with the QoE measurement of the TMGI1 as pausing and sends same to the UE.

It should be noted that due to the MDT measurement conducted by UE in an idle state and an inactive state is mainly a logged MDT measurement, while the MDT measurement conducted by UE in a connected state is an immediate (immediate) MDT measurement, MBS service information can be obtained in real time. Therefore, even if the immediate MDT measurement is started or paused, it is possible to achieve an alignment between the QoE measurement and the MDT measurement.

In some implementations, an embodiment of the present disclosure also provides any one of the following methods for the network-side device to control the alignment between the first quality measurement and the second quality measurement by.

Method 1: when the terminal enters a connected state after starting or stopping a service in an idle state, a service indication message is sent, to instruct the network-side device to start the first quality measurement and the second quality measurement of the service according to the service indication message, thereby aligning the first quality measurement and the second quality measurement.

In an implementation, taking the first quality measurement being the QoE measurement and the second quality measurement being the MDT measurement as an example, after the UE starts or stops the broadcast service in the idle state and the inactive state and enters the connected state, a service indication message (such as an MBS Interest Indication message) is sent to the base station. The base station can then choose to configure the QoE measurement and the MDT measurement of the service that starts.

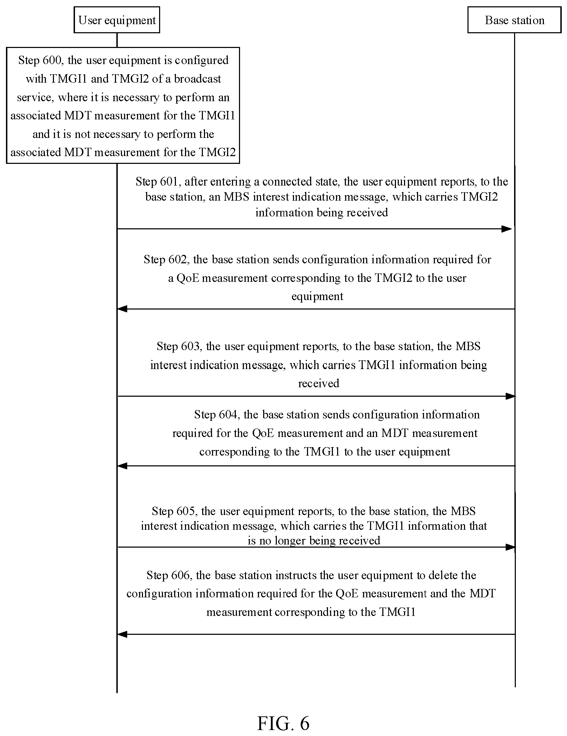

As shown in FIG. 6, the present embodiment provides a measurement alignment method controlled by a base station, and a specific implementation process of the method is as follows.

At step 600, a UE is configured with TMGI1 and TMGI2 of a broadcast service, where it is necessary to perform an associated MDT measurement for the TMGI1 and it is not necessary to perform the associated MDT measurement for the TMGI2.

At step 601, after entering a connected state, the UE reports, to the base station, an MBS interest indication message, which carries TMGI2 information being received.

At step 602, the base station sends configuration information required for a QoE measurement corresponding to the TMGI2 to the UE.

At step 603, the UE reports, to the base station, the MBS interest indication message, which carries TMGI1 information being received.

At step 604: the base station sends configuration information required for the QoE measurement and an MDT measurement corresponding to the TMGI1 to the UE.

At step 605, the UE reports, to the base station, the MBS interest indication message, which carries the TMGI1 information that is no longer being received.

At step 606, the base station instructs the UE to delete the configuration information required for the QoE measurement and the MDT measurement corresponding to the TMGI1.

Method 1 can ensure that the QoE measurement and the MDT measurement are simultaneously started and stopped. However, due to the base station's incapability to monitor UE behaviors in an idle state and an inactive state in real time, it is possible that the MBS service has already been started but the QoE measurement has not been configured for the UE, resulting in a lack of some QoE measurements.

Method 2: the network-side device sends configuration information required for the first quality measurement to a terminal; receives a service indication message sent by the terminal, and determines whether to perform an associated second quality measurement, based on the first quality measurement corresponding to the service in the service indication message. If yes, configuration information required for the second quality measurement is sent to the terminal to align the first quality measurement and the second quality measurement.

In an implementation, the base station sends all the received configuration information to the UE together, the configuration information is sent by the core network or a management station and is required for the QoE measurement related to the broadcast of the UE. After receiving the MBS Interest Indication message reported by the UE, the base station will then determine whether to send the configuration information required for the MDT measurement to the UE according to whether to perform the associated MDT measurement for the QoE measurement of the service that starts.

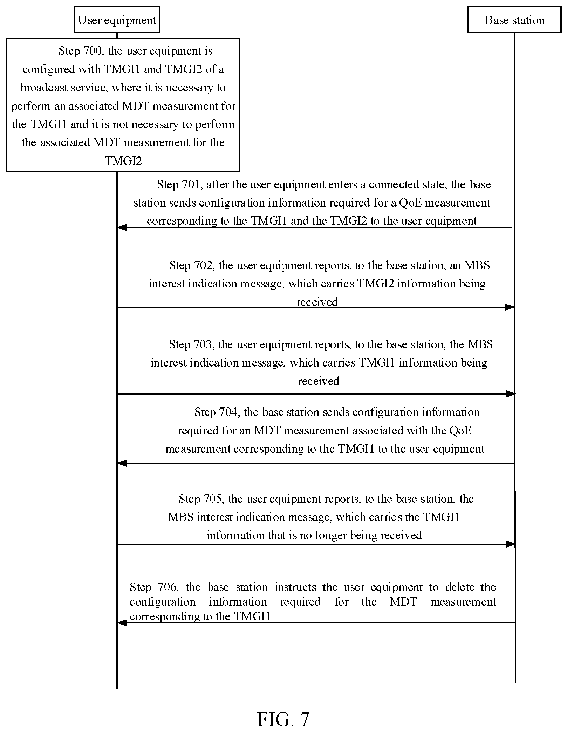

As shown in FIG. 7, the present embodiment provides another measurement alignment method controlled by a base station, and a specific implementation process of the method is as follows.

At step 700, a UE is configured with TMGI1 and TMGI2 of a broadcast service, where it is necessary to perform an associated MDT measurement for the TMGI1 and it is not necessary to perform the associated MDT measurement for the TMGI2.

At step 701, after the UE enters a connected state, the base station sends configuration information required for a QoE measurement corresponding to the TMGI1 and the TMGI2 to the UE.

At step 702, the UE reports, to the base station, an MBS interest indication message, which carries TMGI2 information being received.

At step 703, the UE reports, to the base station, the MBS interest indication message, which carries TMGI1 information being received.

At step 704, the base station sends configuration information required for an MDT measurement associated with the QoE measurement corresponding to the TMGI1 to the UE.

At step 705, the UE reports, to the base station, the MBS interest indication message, which carries the TMGI1 information that is no longer being received.

At step 706, the base station instructs the UE to delete the configuration information required for the MDT measurement corresponding to the TMGI1.

Method 2 has configured the QoE measurement from the beginning, which can ensure that the QoE measurement can be performed as long as an MBS service is started. However, the MDT measurement cannot be configured or started until the base station receives the MBS Interest Indication message. Since the base station cannot monitor UE behaviors in an idle state and an inactive state in real time, complete temporal alignment cannot be guaranteed.

Both method 1 and method 2 can achieve alignment between the QoE measurement and the MDT measurement when the UE is in the connected state.

Embodiment 2: based on the same inventive concept, an embodiment of the present disclosure also provides a first type of terminal. Since the terminal is a terminal in the method of the embodiment of the present disclosure, and the problem-solving principle of the terminal is similar to that of the method, reference can be made to the implementation of the method for an implementation of the terminal, and no repetition will be made herein.

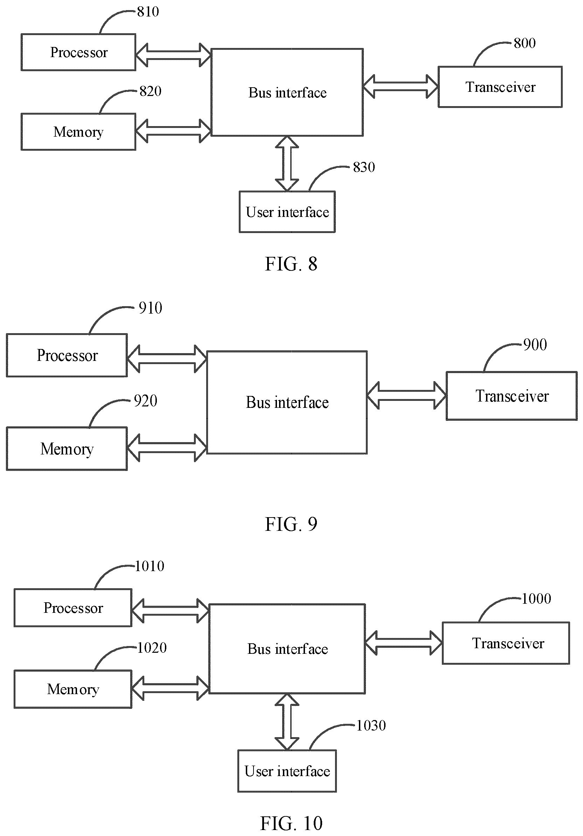

As shown in FIG. 8, an embodiment of the present disclosure also provides a first type of terminal, which includes:
a transceiver 800 configured to transmit and receive data under control of a processor 810.

The bus architecture may include any number of interconnected buses and bridges, specifically, various circuits are linked together through one or more processors represented by the processor 810 and a memory represented by a memory 820. The bus architecture can also link various other circuits such as peripheral devices, voltage regulators, and power management circuits etc. together, which are well-known in the field. Therefore, no further description will be made to them in the present application. The bus interface provides an interface. The transceiver 800 can be multiple components, including a transmitter and a receiver, that provides a unit for communicating with various other apparatuses over transmission media, thesetransmission media include, these transmission media include a wireless channel, a wired channel, an optical cable, and other transmission media. For different UEs, a user interface 830 can also be an interface that can connect external and internal required devices, the connected devices include but are not limited to a keypad, a display, a speaker, a microphone, a joystick, etc.

The processor 810 is responsible for managing the bus architecture and usual processing, while the memory 820 can store data used by the processor 810 when performing operations.

In some implementations, the processor 810 can be a CPU (Central Processing Unit), an ASIC (Application Specific Integrated Circuit, Application Specific Integrated Circuit), an FPGA (Field-Programmable Gate Array, Field-Programmable Gate Array), or a CPLD (Complex Programmable Logic Device, Complex Programmable Logic Device), and the processor can also adopt a multi-core architecture.

The processor 810 is configured to perform any one of the methods provided in the embodiment of the present disclosure according to the obtained executable instructions, by calling a computer program stored in the memory. The processor and the memory can also be physically separated and arranged.

The processor 810 is configured to perform steps of:
receiving configuration information, and activating a first quality measurement based on the configuration information, where the configuration information represents configuration information required to perform the first quality measurement and a second quality measurement;
determining a measurement manner, where the measurement manner represents whether to perform the second quality measurement associated with the first quality measurement in a measurement period of the first quality measurement; and
aligning the first quality measurement and the second quality measurement based on the measurement manner, and determining an aligned measurement result.

In some implementations, the processor 810 is specifically configured to perform steps of:
receiving the configuration information through an access stratum and sending the configuration information required to perform the first quality measurement in the configuration information to an application layer; and
activating the first quality measurement through the application layer, where activating the first quality measurement represents that the first quality measurement is performable.

In some implementations, the processor 810 is specifically configured to perform a step of:
if the measurement manner represents to perform the second quality measurement associated with the first quality measurement in the measurement period of the first quality measurement, aligning the first quality measurement and the second quality measurement based on the measurement period, and determining the aligned measurement result.

In some implementations, the processor 810 is specifically configured to perform a step of:
controlling, based on the measurement period, starting and pausing of the first quality measurement and/or starting and pausing of the second quality measurement, to align the first quality measurement and the second quality measurement.

In some implementations, the processor 810 is specifically configured to perform steps of:
based on the configuration information required to perform the first quality measurement in the configuration information, determining a starting time and an ending time of the measurement; and
determining the measurement period based on the starting time and the ending time.

In some implementations, the processor 810 is specifically configured to perform steps of:
determining the measurement period corresponding to the first quality measurement performed by an application layer based on the starting time and the ending time; and
sending the starting time and the ending time to an access stratum through the application layer, and determining the measurement period corresponding to the second quality measurement performed by the access stratum.

In some implementations, the processor 810 is specifically configured to perform a step of:
saving the configuration information; or
deleting a saved first measurement report corresponding to the first quality measurement; or
deleting saved configuration information required to perform the first quality measurement; or
deleting a saved second measurement report corresponding to the second quality measurement; or
deleting saved configuration information required to perform the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

It should be noted that the above terminal provided in the embodiment of the present disclosure can implement all the method steps implemented in the above method embodiments and achieve the same technical effects. Therefore, specific descriptions of the same parts and beneficial effects as the method embodiments will not be repeated here in the present embodiment.

Embodiment 3: based on the same inventive concept, an embodiment of the present disclosure also provides a network-side device. Since the network-side device is a device in the method of the embodiment of the present disclosure, and the problem-solving principle of the device is similar to that of the method, reference can be made to the implementation of the method for an implementation of the device, and no repetition will be made herein.

As shown in FIG. 9, an embodiment of the present disclosure also provides a network-side device, which includes:
a transceiver 900 configured to transmit and receive data under control of a processor 910.

The bus architecture may include any number of interconnected buses and bridges, specifically, various circuits are linked together through one or more processors represented by the processor 910 and a memory represented by a memory 920. The bus architecture can also link various other circuits such as peripheral devices, voltage regulators, and power management circuits etc. together, which are well-known in the field. Therefore, no further description will be made to them in the present application. The bus interface provides an interface. The transceiver 900 can be multiple components, including a transmitter and a receiver, that provides a unit for communicating with various other apparatuses over transmission media, these transmission media include a wireless channel, a wired channel, an optical cable, and other transmission media. The processor 910 is responsible for managing the bus architecture and usual processing, while the memory 920 can store data used by the processor 910 when performing operations.

The processor 910 can be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor can also adopt a multi-core architecture.

The processor 910 is configured to perform steps of:
sending configuration information and current measurement status of a second quality measurement to a terminal, where the configuration information represents configuration information required to perform the first quality measurement and the second quality measurement;
receiving a service indication message sent by the terminal, and updating the current measurement status based on the service indication message to obtain updated measurement status; and
sending the updated measurement status to the terminal, to enable the terminal to perform the second quality measurement associated with the first quality measurement based on the updated measurement status when performing the first quality measurement.

In some implementations, the processor 910 is specifically configured to perform a step of:
if the current measurement status shows pausing and it is determined to perform the second quality measurement associated with the first quality measurement based on the service indication message, determining the updated measurement status as starting; or
if the current measurement status shows starting and it is determined to pause the second quality measurement associated with the first quality measurement based on the service indication message, determining the updated measurement status as pausing.

In some implementations, the current measurement status includes starting or pausing; and/or, reference information of the second quality measurement;
where the reference information is used to determine the second quality measurement.

In some implementations, where the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

It should be noted that the above device provided in the embodiment of the present disclosure can implement all the method steps implemented in the above method embodiments and achieve the same technical effects. Therefore, specific descriptions of the same parts and beneficial effects as the method embodiments will not be repeated here in the present embodiment.

Embodiment 4: based on the same inventive concept, an embodiment of the present disclosure also provides a second type of terminal. Since the terminal is a terminal in the method of the embodiment of the present disclosure, and the problem-solving principle of the terminal is similar to that of the method, reference can be made to the implementation of the method for an implementation of the terminal, and no repetition will be made herein.

As shown in FIG. 10, an embodiment of the present disclosure also provides a second type of terminal, which includes:
a transceiver 1000 configured to transmit and receive data under control of a processor 1010.

The bus architecture may include any number of interconnected buses and bridges, specifically, various circuits are linked together through one or more processors represented by the processor 1010 and a memory represented by a memory 1020. The bus architecture can also link various other circuits such as peripheral devices, voltage regulators, and power management circuits etc. together, which are well-known in the field. Therefore, no further description will be made to them in the present application. The bus interface provides an interface. The transceiver 1000 can be multiple components, including a transmitter and a receiver, that provides a unit for communicating with various other apparatuses over transmission media, these transmission media include, these transmission media include a wireless channel, a wired channel, an optical cable, and other transmission media. For different UEs, a user interface 1030 can also be an interface that can connect external and internal required devices, the connected devices include but are not limited to a keypad, a display, a speaker, a microphone, a joystick, etc.

The processor 1010 is responsible for managing the bus architecture and usual processing, while the memory 1020 can store data used by the processor 1000 when performing operations.

In some implementations, the processor 1010 can be a CPU (Central Processing Unit), an ASIC (Application Specific Integrated Circuit, Application Specific Integrated Circuit), an FPGA (Field-Programmable Gate Array, Field-Programmable Gate Array), or a CPLD (Complex Programmable Logic Device, Complex Programmable Logic Device), and the processor can also adopt a multi-core architecture.

The processor is configured to perform any one of the methods provided in the embodiment of the present disclosure according to the obtained executable instructions, by calling a computer program stored in the memory. The processor and the memory can also be physically separated and arranged.

The processor 1010 is configured to perform steps of:
receiving configuration information and current measurement status of a second quality measurement, where the configuration information represents the configuration information required to perform a first quality measurement and the second quality measurement;
sending a service indication message to a network-side device to instruct the network-side device to update the current measurement status based on the service indication message to obtain updated measurement status; and
receiving the updated measurement status, and performing the second quality measurement associated with the first quality measurement based on the updated measurement status when performing the first quality measurement.

In some implementations, the processor 1010 is configured to perform a step of:
if the update measurement status shows starting, performing the second quality measurement associated with the first quality measurement when performing the first quality measurement; or
if the update measurement status shows pausing, pausing the second quality measurement associated with the first quality measurement when performing the first quality measurement.

In some implementations, the current measurement status includes starting or pausing; and/or, reference information of the second quality measurement;
where the reference information is used to determine the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

It should be noted that the above terminal provided in the embodiment of the present disclosure can implement all the method steps implemented in the above method embodiments and achieve the same technical effects. Therefore, specific descriptions of the same parts and beneficial effects as the method embodiments will not be repeated here in the present embodiment.

Embodiment 5: based on the same inventive concept, an embodiment of the present disclosure also provides a measurement alignment apparatus. Since the apparatus is an apparatus corresponding to the method of the embodiment of the present disclosure, and the problem-solving principle of the apparatus is similar to that of the method, reference can be made to the implementation of the method for an implementation of the apparatus, and no repetition will be made herein.

It should be noted that a division of units in the embodiment of the present disclosure is illustrative and only a logical functional division. In an actual implementation, there may be other division methods. In addition, various functional units in various embodiments of the present disclosure can be integrated into one processing unit; or various units can exist alone physically; or two or more units can be integrated into one unit. The above-mentioned integrated unit can be implemented in the form of hardware or software functional units.

If the integrated unit is implemented in the form of a software functional unit and is sold or used as an independent product, it can be stored in a processor-readable storage medium. Based on this understanding, a technical solution of the present disclosure can essentially be embodied in the form of a software product, or a contribution part of the technical solutions of the present disclosure to the prior art can be embodied in the form of the software product, or all or part of the technical solutions of the present disclosure can be embodied in the form of the software product. The computer software product is stored in a storage medium and includes several instructions for causing a computer device (which may be a personal computer, server, or network device, etc.) or the processor (processor) to perform all or part of steps of the methods described in various embodiments of the present disclosure. The aforementioned storage media include various media that can store program codes, such as a USB flash disk, a portable hard disk, a read only memory (Read-Only Memory, ROM), a random access memory (Random Access Memory, RAM), a magnetic disk, or an optical disk, etc.

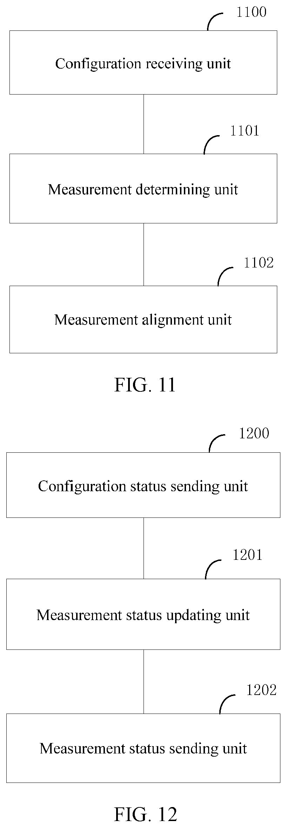

As shown in FIG. 11, the apparatus includes:
a configuration receiving unit 1100, configured to receive configuration information, and activate a first quality measurement based on the configuration information, where the configuration information represents configuration information required to perform the first quality measurement and a second quality measurement;
a measurement determining unit 1101, configured to determine a measurement manner, where the measurement manner represents whether to perform the second quality measurement associated with the first quality measurement in a measurement period of the first quality measurement; and
a measurement alignment unit 1102, configured to align the first quality measurement and the second quality measurement based on the measurement manner, and determine an aligned measurement result.

In some implementations, the configuration receiving unit 1100 is specifically configured to:
receive the configuration information through an access stratum and send the configuration information required to perform the first quality measurement in the configuration information to an application layer; and
activate the first quality measurement through the application layer, where activating the first quality measurement represents that the first quality measurement is performable.

In some implementations, the measurement alignment unit 1102 is specifically configured to:
if the measurement manner represents to perform the second quality measurement associated with the first quality measurement in the measurement period of the first quality measurement, align the first quality measurement and the second quality measurement based on the measurement period, and determine the aligned measurement result.

In some implementations, the measurement alignment unit 1102 is specifically configured to:
control, based on the measurement period, starting and pausing of the first quality measurement, and/or starting and pausing of the second quality measurement to align the first quality measurement and the second quality measurement.

In some implementations, the measurement determining unit 1101 is specifically configured to:
based on the configuration information required to perform the first quality measurement in the configuration information, determine a starting time and an ending time of the measurement; and
determine the measurement period based on the starting time and the ending time.

In some implementations, the measurement determining unit 1101 is specifically configured to:
determine, based on the starting time and the ending time, the measurement period corresponding to the first quality measurement performed by an application layer; and
send the starting time and the ending time to the access stratum through the application layer, and determine the measurement period corresponding to the second quality measurement performed by the access stratum.

In some implementations, the configuration receiving unit 1100 is further configured to:
save the configuration information; or
delete a saved first measurement report corresponding to the first quality measurement; or
delete saved configuration information required to perform the first quality measurement; or
delete a saved second measurement report corresponding to the second quality measurement; or
delete a saved second measurement report corresponding to the second quality measurement; or
delete saved configuration information required to perform the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

It should be noted that the above apparatus provided in the embodiment of the present disclosure can implement all the method steps implemented in the above method embodiments and achieve the same technical effects. Therefore, specific descriptions of the same parts and beneficial effects as the method embodiments will not be repeated here in the present embodiment.

Embodiment 6: based on the same inventive concept, an embodiment of the present disclosure also provides a measurement alignment apparatus. Since the apparatus is an apparatus corresponding to the method of the embodiment of the present disclosure, and the problem-solving principle of the apparatus is similar to that of the method, reference can be made to the implementation of the method for an implementation of the apparatus, and no repetition will be made herein.

It should be noted that a division of units in the embodiment of the present disclosure is illustrative and only a logical functional division. In actual implementation, there may be other division methods. In addition, various functional units in various embodiments of the present disclosure can be integrated into one processing unit; or various units can exist alone physically; or two or more units can be integrated into one unit. The above-mentioned integrated unit can be implemented in the form of hardware or software functional units.

If the integrated unit is implemented in the form of a software functional unit and is sold or used as an independent product, it can be stored in a processor-readable storage medium. Based on this understanding, a technical solution of the present disclosure can essentially be embodied in the form of a software product, or a contribution part of the technical solutions of the present disclosure to the prior art can be embodied in the form of the software product, or all or part of the technical solutions of the present disclosure can be embodied in the form of the software product. The computer software product is stored in a storage medium and includes several instructions for causing a computer device (which may be a personal computer, server, or network device, etc.) or the processor (processor) to perform all or part of steps of the methods described in various embodiments of the present disclosure. The aforementioned storage media include various media that can store program codes, such as a USB flash disk, a portable hard disk, a read only memory (Read-Only Memory, ROM), a random access memory (Random Access Memory, RAM), a magnetic disk, or an optical disk, etc.

As shown in FIG. 12, the apparatus includes:
a configuration status sending unit 1200, configured to send configuration information and current measurement status of a second quality measurement to a terminal, where the configuration information represents configuration information required to perform a first quality measurement and the second quality measurement;
a measurement status updating unit 1201, configured to receive a service indication message sent by the terminal, and update the current measurement status based on the service indication message to obtain updated measurement status; and
a measurement status sending unit 1202, configured to send the updated measurement status to the terminal, to enable the terminal to perform the second quality measurement associated with the first quality measurement based on the updated measurement status when performing the first quality measurement.

In some implementations, the measurement status updating unit 1201 is specifically configured to:
if the current measurement status shows pausing and it is determined to perform the second quality measurement associated with the first quality measurement based on the service indication message, determining the updated measurement status as starting; or
if the current measurement status shows starting and it is determined to pause the second quality measurement associated with the first quality measurement based on the service indication message, determining the updated measurement status as pausing.

In some implementations, the current measurement status includes starting or pausing; and/or, reference information of the second quality measurement;
where the reference information is used to determine the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

It should be noted that the above apparatus provided in the embodiment of the present disclosure can implement all the method steps implemented in the above method embodiments and achieve the same technical effects. Therefore, specific descriptions of the same parts and beneficial effects as the method embodiments will not be repeated here in the present embodiment.

Embodiment 7: based on the same inventive concept, an embodiment of the present disclosure also provides a measurement alignment apparatus. Since the apparatus is an apparatus corresponding to the method of the embodiment of the present disclosure, and the problem-solving principle of the apparatus is similar to that of the method, reference can be made to the implementation of the method for an implementation of the apparatus, and no repetition will be made herein.

It should be noted that a division of units in the embodiment of the present disclosure is illustrative and only a logical functional division. In an actual implementation, there may be other division methods. In addition, various functional units in various embodiments of the present disclosure can be integrated into one processing unit; or various units can exist alone physically; or two or more units can be integrated into one unit. The above-mentioned integrated unit can be implemented in the form of hardware or software functional units.

If the integrated unit is implemented in the form of a software functional unit and is sold or used as an independent product, it can be stored in a processor-readable storage medium. Based on this understanding, a technical solution of the present disclosure can essentially be embodied in the form of a software product, or a contribution part of the technical solutions of the present disclosure to the prior art can be embodied in the form of the software product, or all or part of the technical solutions of the present disclosure can be embodied in the form of the software product. The computer software product is stored in a storage medium and includes several instructions for causing a computer device (which may be a personal computer, server, or network device, etc.) or the processor (processor) to perform all or part of steps of the methods described in various embodiments of the present disclosure. The aforementioned storage media include various media that can store program codes, such as a USB flash disk, a portable hard disk, a read only memory (Read-Only Memory, ROM), a random access memory (Random Access Memory, RAM), a magnetic disk, or an optical disk, etc.

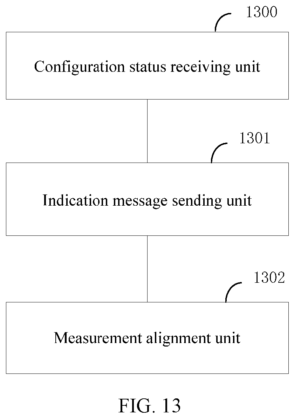

As shown in FIG. 13, the apparatus includes:
a configuration status receiving unit 1300, configured to receive configuration information and current measurement status of a second quality measurement, where the configuration information represents configuration information required to perform a first quality measurement and the second quality measurement;
an indication message sending unit 1301, configured to send a service indication message to a network-side device to instruct the network-side device to update the current measurement status based on the service indication message to obtain updated measurement status; and
a measurement alignment unit 1302, configured to receive the updated measurement status, and perform the second quality measurement associated with the first quality measurement based on the updated measurement status when performing the first quality measurement.

In some implementations, the measurement alignment unit 1302 is specifically configured to:
if the update measurement status shows starting, perform the second quality measurement associated with the first quality measurement when performing the first quality measurement; or
if the update measurement status shows pausing, pause the second quality measurement associated with the first quality measurement when performing the first quality measurement.

In some implementations, the current measurement status includes starting or pausing; and/or, reference information of the second quality measurement;
where the reference information is used to determine the second quality measurement.

In some implementations, the configuration information includes: first configuration information required to perform the first quality measurement; second configuration information required to perform the second quality measurement; an association between the first quality measurement and the second quality measurement;
where the first configuration information includes one or more of the following:
first quality reference information; a service type; service list information; a starting time and an ending time of a service; time point information; a measurement period; a measurement duration.

It should be noted that the above apparatus provided in the embodiment of the present disclosure can implement all the method steps implemented in the above method embodiments and achieve the same technical effects. Therefore, specific descriptions of the same parts and beneficial effects as the method embodiments will not be repeated here in the present embodiment.

The present embodiment also provides a computer storage medium, the processor-readable storage medium may be any available medium or data storage device that a processor can access, including but not limited to a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD), etc.) etc.
receiving configuration information, and activating a first quality measurement based on the configuration information, where the configuration information represents configuration information required to perform the first quality measurement and a second quality measurement;
determining a measurement manner, where the measurement manner represents whether to perform the second quality measurement associated with the first quality measurement in a measurement period of the first quality measurement; and
aligning the first quality measurement and the second quality measurement based on the measurement manner, and determining an aligned measurement result.

The present embodiment also provides a computer storage medium, the processor-readable storage medium may be any available medium or data storage device that a processor can access, including but not limited to a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD), etc.) etc.
sending configuration information and current measurement status of a second quality measurement to a terminal, where the configuration information represents configuration information required to perform a first quality measurement and the second quality measurement;
receiving a service indication message sent by the terminal, and updating the current measurement status based on the service indication message to obtain updated measurement status; and
sending the updated measurement status to the terminal, to enable the terminal to perform the second quality measurement associated with the first quality measurement based on the updated measurement status when performing the first quality measurement.

The present embodiment also provides a computer storage medium, the processor-readable storage medium may be any available medium or data storage device that a processor can access, including but not limited to a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD), etc.) etc.
receiving configuration information and current measurement status of a second quality measurement, where the configuration information represents the configuration information required to perform a first quality measurement and the second quality measurement;
sending a service indication message to a network-side device to instruct the network-side device to update the current measurement status based on the service indication message to obtain updated measurement status; and
receiving the updated measurement status, and performing the second quality measurement associated with the first quality measurement based on the updated measurement status when performing the first quality measurement.

The person skilled in the art should understand that the embodiments of the present disclosure can be provided as methods, systems, or computer program products. Therefore, the present disclosure may take the form of a fully hardware embodiment, a fully software embodiment, or a combination of software and hardware embodiments. Moreover, the present disclosure may take the form of a computer program product implemented on one or more computer usable storage media (including but not limited to a disk memory and an optical memory) containing computer usable program codes.

The present disclosure is described with reference to the flowcharts and/or block diagrams of the methods, devices (systems), and computer program products according to the embodiments of the present disclosure. It should be understood that each process and/or block in the flowchart(s) and/or block diagram(s), as well as a combination of processes and/or blocks in the flowchart(s) and/or block diagram(s), can be implemented by computer program instructions. These computer program instructions can be provided to a processor of a general-purpose computer, specialized computer, embedded processor, or other programmable data processing devices to generate a machine, so that the instructions executed by the processor of the computer or other programmable data processing device generate a device for implementing functions specified in one or more processes in the flowchart(s) and/or one or more blocks in the block diagram(s).

These computer program instructions can also be stored in computer-readable memory that can guide a computer or other programmable data processing devices to operate in a specific manner, so that the instructions stored in the computer-readable memory generate a manufactured product including an instruction device, which implements the functions specified one or more processes in the flowchart(s), and/or, one or more blocks in the block diagram(s).

These computer program instructions can also be loaded onto a computer or other programmable data processing devices, so that a series of operational steps can be executed on the computer or other programmable devices to generate computer implemented processing. Thereby the instructions executed on the computer or other programmable devices provide steps for implementing the functions specified in one or more processes in the flowchart(s) and/or one or more blocks in the block diagram(s).

For the convenience of explanation, the present disclosure has provided the above description in conjunction with a specific implementation. However, the above exemplary discussion is not intended to be exhaustive or to limit the implementation to the specific forms disclosed above. According to the above teachings, various modifications and transformations can be obtained. The selection and description of the above implementations are to better explain the content of the present disclosure, so that those skilled in the art can better use the implementations.

## Claims

1. A measurement alignment method, comprising:
receiving configuration information, and activating a first quality measurement based on the configuration information, wherein the configuration information represents configuration information required to perform the first quality measurement and a second quality measurement;
determining a measurement manner, wherein the measurement manner represents whether to perform the second quality measurement associated with the first quality measurement in a measurement period of the first quality measurement; and
aligning the first quality measurement and the second quality measurement based on the measurement manner, and determining an aligned measurement result.

2. The method according to claim 1, wherein the receiving the configuration information, and activating the first quality measurement based on the configuration information comprise:
receiving the configuration information through an access stratum and sending the configuration information required to perform the first quality measurement in the configuration information to an application layer; and
activating the first quality measurement through the application layer, wherein activating the first quality measurement represents that the first quality measurement is performable.

3. The method according to claim 1, wherein the aligning the first quality measurement and the second quality measurement based on the measurement manner, and determining the aligned measurement result comprise:
if the measurement manner represents to perform the second quality measurement associated with the first quality measurement in the measurement period of the first quality measurement, aligning the first quality measurement and the second quality measurement based on the measurement period, and determining the aligned measurement result.

4. The method according to claim 3, wherein the aligning the first quality measurement and the second quality measurement based on the measurement period comprises:
controlling, based on the measurement period, starting and pausing of the first quality measurement and/or starting and pausing of the second quality measurement, to align the first quality measurement and the second quality measurement.

5. The method according to claim 1, wherein determining the measurement period comprises:
based on the configuration information required to perform the first quality measurement in the configuration information, determining a starting time and an ending time of the measurement; and
determining the measurement period based on the starting time and the ending time.

6. The method according to claim 5, wherein the determining the measurement period based on the starting time and the ending time comprises:
determining, based on the starting time and the ending time, the measurement period corresponding to the first quality measurement performed by an application layer; and
sending the starting time and the ending time to an access stratum through the application layer, and determining the measurement period corresponding to the second quality measurement performed by the access stratum.

7. The method according to claim 1, wherein after receiving the configuration information, the method further comprises at least one of the following:
saving the configuration information;
deleting a saved first measurement report corresponding to the first quality measurement;
deleting saved configuration information required to perform the first quality measurement;
deleting a saved second measurement report corresponding to the second quality measurement; or
deleting saved configuration information required to perform the second quality measurement.

8. The method according to any one of claims 1 to 7, wherein the configuration information comprises: first configuration information required to perform the first quality measurement; second configuration information required to perform the second quality measurement; an association between the first quality measurement and the second quality measurement;
wherein the first configuration information comprises one or more of the following:
first quality reference information; a service type; service list information; a starting time and an ending time of a service; time point information; a measurement period; a measurement duration.

9. A measurement alignment method, comprising:
sending configuration information and current measurement status of a second quality measurement to a terminal, wherein the configuration information represents configuration information required to perform a first quality measurement and the second quality measurement;
receiving a service indication message sent by the terminal, and updating the current measurement status based on the service indication message to obtain updated measurement status; and
sending the updated measurement status to the terminal, to enable the terminal to perform the second quality measurement associated with the first quality measurement based on the updated measurement status when performing the first quality measurement.

10. The method according to claim 9, wherein the receiving the service indication message sent by the terminal, and updating the current measurement status based on the service indication message to obtain the updated measurement status comprise:
if the current measurement status shows pausing and it is determined to perform the second quality measurement associated with the first quality measurement based on the service indication message, determining the updated measurement status as starting; or
if the current measurement status shows starting and it is determined to pause the second quality measurement associated with the first quality measurement based on the service indication message, determining the updated measurement status as pausing.

11. The method according to claim 9 or 10, wherein the current measurement status comprises starting or pausing; and/or, reference information of the second quality measurement;
wherein the reference information is used to determine the second quality measurement.

12. The method according to claim 9 or 10, wherein the configuration information comprises: first configuration information required to perform the first quality measurement; second configuration information required to perform the second quality measurement; an association between the first quality measurement and the second quality measurement;
wherein the first configuration information comprises one or more of the following:
first quality reference information; a service type; service list information; a starting time and an ending time of a service; time point information; a measurement period; a measurement duration.

13. A measurement alignment method, comprising:
receiving configuration information and current measurement status of a second quality measurement, wherein the configuration information represents configuration information required to perform a first quality measurement and the second quality measurement;
sending a service indication message to a network-side device to instruct the network-side device to update the current measurement status based on the service indication message to obtain updated measurement status; and
receiving the updated measurement status, and performing the second quality measurement associated with the first quality measurement based on the updated measurement status when performing the first quality measurement.

14. The method according to claim 13, wherein the performing the second quality measurement associated with the first quality measurement based on the updated measurement status when performing the first quality measurement comprises:
if the update measurement status shows starting, performing the second quality measurement associated with the first quality measurement when performing the first quality measurement; or
if the update measurement status shows pausing, pausing the second quality measurement associated with the first quality measurement when performing the first quality measurement.

15. The method according to claim 13 or 14, wherein the current measurement status comprises starting or pausing; and/or, reference information of the second quality measurement;
wherein the reference information is used to determine the second quality measurement.

16. The method according to claim 13 or 14, wherein the configuration information comprises: first configuration information required to perform the first quality measurement; second configuration information required to perform the second quality measurement; an association between the first quality measurement and the second quality measurement;
wherein the first configuration information comprises one or more of the following:
first quality reference information; a service type; service list information; a starting time and an ending time of a service; time point information; a measurement period; a measurement duration.

17. A first type of terminal, comprising: a memory, a transceiver and a processor; wherein the memory is configured to store a computer program; the transceiver is configured to transmit and receive data under control of the processor; and the processor is configured to read the computer program in the memory and perform steps of the method according to any one of claims 1 to 8.

18. A network-side device, comprising: a memory, a transceiver and a processor; wherein the memory is configured to store a computer program; the transceiver is configured to transmit and receive data under control of the processor; and the processor is configured to read the computer program in the memory and perform steps of the method according to any one of claims 9 to 12.

19. A second type of terminal, comprising: a memory, a transceiver and a processor;
wherein the memory is configured to store a computer program; the transceiver is configured to transmit and receive data under control of the processor; and the processor is configured to read the computer program in the memory and perform steps of the method according to any one of claims 13 to 16.

20. A measurement alignment apparatus, comprising:
a configuration receiving unit, configured to receive configuration information, and activate a first quality measurement based on the configuration information, wherein the configuration information represents configuration information required to perform the first quality measurement and a second quality measurement;
a measurement determining unit, configured to determine a measurement manner, wherein the measurement manner represents whether to perform the second quality measurement associated with the first quality measurement in a measurement period of the first quality measurement; and
a measurement alignment unit, configured to align the first quality measurement and the second quality measurement based on the measurement manner, and determine an aligned measurement result.

21. A measurement alignment apparatus, comprising:
a configuration status sending unit, configured to send configuration information and current measurement status of a second quality measurement to a terminal, wherein the configuration information represents configuration information required to perform a first quality measurement and the second quality measurement;
a measurement status updating unit, configured to receive a service indication message sent by the terminal, and update the current measurement status based on the service indication message to obtain updated measurement status; and
a measurement status sending unit, configured to send the updated measurement status to the terminal, to enable the terminal to perform the second quality measurement associated with the first quality measurement based on the updated measurement status when performing the first quality measurement.

22. A measurement alignment apparatus, comprising:
a configuration status receiving unit, configured to receive configuration information and current measurement status of a second quality measurement, wherein the configuration information represents configuration information required to perform a first quality measurement and the second quality measurement;
an indication message sending unit, configured to send a service indication message to a network-side device to instruct the network-side device to update the current measurement status based on the service indication message to obtain updated measurement status; and
a measurement alignment unit, configured to receive the updated measurement status, and perform the second quality measurement associated with the first quality measurement based on the updated measurement status when performing the first quality measurement.

23. A computer storage medium having a computer program stored thereon, wherein the computer program, when performed by a processor, implements steps of the method according to any one of claims 1 to 8 or 9 to 12 or 13 to 16.
